(19) **Europäisches Patentamt / European Patent Office / Office européen des brevets**

(11) **EP 4 769 784 A1**

(12) **EUROPEAN PATENT APPLICATION**
published in accordance with Art. 153(4) EPC

(43) Date of publication:
01.07.2026 Bulletin 2026/27

(21) Application number: 25809853.2

(22) Date of filing: 29.04.2025

(51) International Patent Classification (IPC):
H01M 50/446 (2021.01)   H01M 50/44 (2021.01)
H01M 50/443 (2021.01)   H01M 50/431 (2021.01)
H01M 50/489 (2021.01)   H01M 50/42 (2021.01)
H01M 50/426 (2021.01)   H01M 50/403 (2021.01)
H01M 10/052 (2010.01)

(52) Cooperative Patent Classification (CPC):
H01M 10/052; H01M 50/403; H01M 50/42;
H01M 50/426; H01M 50/431; H01M 50/44;
H01M 50/443; H01M 50/446; H01M 50/489;
Y02E 60/10

(86) International application number:
PCT/KR2025/005780

(87) International publication number:
WO 2025/234673 (13.11.2025 Gazette 2025/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 08.05.2024  KR 20240060614

(71) Applicant: LG Energy Solution, Ltd.
Seoul 07335 (KR)

(72) Inventors:
• KIM, Min-Gyu
  Daejeon 34122 (KR)
• KA, Kyung-Ryun
  Daejeon 34122 (KR)
• KIM, Min-Ji
  Daejeon 34122 (KR)
• KIM, Ji-Hyeon
  Daejeon 34122 (KR)
• HWANG, Seon-Woo
  Daejeon 34122 (KR)

(74) Representative: Hoffmann Eitle
Patent- und Rechtsanwälte PartmbB
Arabellastraße 30
81925 München (DE)

(54) **SEPARATOR FOR ELECTROCHEMICAL DEVICE, AND PREPARATION METHOD THEREFOR**

(57) The present disclosure relates to a separator for an electrochemical device and a method for manufacturing the same. In particular, the separator according to an aspect of the present disclosure has an advantage of improving pore characteristics of the separator manufactured by electrospinning, thereby improving electrochemical performance when the electrospun separator is used in an electrochemical device.

FIG. 1

**Description**

TECHNICAL FIELD

The present disclosure relates to a separator for an electrochemical device and a method for manufacturing the same. More particularly, the present disclosure relates to a separator using electrospinning and a method for manufacturing the same.

BACKGROUND

A lithium secondary battery is manufactured through processes of placing an electrode assembly including a unit of positive electrode/separator/negative electrode in a battery case, electrolyte injection and case sealing. The separator for use in the lithium secondary battery generally includes a polyolefin-based porous sheet produced by melting a polyolefin-based polymer and forming it into a sheet shape.

However, because the polyolefin-based porous sheet shrinks when exposed to heat, an electrochemical device including the polyolefin-based porous sheet as the separator is not desirable in terms of safety. To address this issue, research and development has been made on separators having high heat resistance to prevent thermal shrinkage.

As an alternative to the polyolefin-based porous sheet, studies have been made on electrospun separators, but the electrospun separators have a large pore size, and are not suitable to perform the separator function when used as separators of electrochemical devices, thereby failing to bring them into commercialization.

Accordingly, there is still a continuing need for development of heat-resistant separators with improved heat resistance and outstanding performance when used in electrochemical device applications.

DISCLOSURE

Technical Problem

The present disclosure is directed to providing a separator designed to solve the above-described problems, a method for manufacturing the same, and an electrochemical device including the same.

Specifically, the present disclosure is directed to providing a separator manufactured using electrospinning to replace a polyolefin-based polymer sheet having thermally shrinking properties and a method for manufacturing the same.

In an aspect, the present disclosure is directed to providing a separator having a smaller thickness and improved pore characteristics using electrospinning and a method for manufacturing the same.

Technical Solution

To achieve the above-described objectives,
according to an aspect of the present disclosure, provided is a separator of the following embodiments.

The separator according to a first embodiment includes:

a polymer composite film including polymer nanofibers and inorganic particles held together by the polymer nanofibers,
wherein the polymer composite film includes a three-dimensional network structure formed by the polymer nanofibers and a pore structure formed by gaps between the polymer nanofibers.
wherein the inorganic particles include inorganic particles having a fracture toughness of 0.8 MPa·m$^{1/2}$ or more, and
wherein a thickness of the polymer composite film is 15 $\mu$m or less.

According to a second embodiment, in the first embodiment,
the polymer composite film may be in a shape of a free-standing film.

According to a third embodiment, in the first or second embodiment,
the three-dimensional network structure may be formed by electrospinning.

According to a fourth embodiment, in any one of the first to third embodiments,
the separator may be free of a polyolefin-based substrate.

According to a fifth embodiment, in any one of the first to fourth embodiments,
an average pore diameter of the polymer composite film may be 10 $\mu$m or less.

According to a sixth embodiment, in any one of the first to fifth embodiments,
an average diameter of the polymer nanofibers may be 50 nm to 1,000 nm.

According to a seventh embodiment, in any one of the first to sixth embodiments,

the inorganic particles may include $Al_2O_3$, $Al(O)OH$, $BaTiO_3$, $Pb(Zr,Ti)O_3$ (PZT), $Pb_{1-x}La_xZr_{1-y}Ti_yO_3$ (PLZT, $0<x<1$, $0<y<1$), $HfO_2$, $SrTiO_3$, $SnO_2$, $CeO_2$, $MgO$, $NiO$, $CaO$, $ZnO$, $ZrO_2$, $Y_2O_3$, $SiC$, $TiO_2$ or a mixture of two or more thereof.

According to an eighth embodiment, in any one of the first to seventh embodiments, the inorganic particles further include inorganic particles having the fracture toughness of less than $0.8\ MPa \cdot m^{1/2}$.

According to a ninth embodiment, in any one of the first to eighth embodiments, the polymer nanofibers may include a PVDF-based polymer, an acrylic polymer or a mixture thereof.

According to another aspect of the present disclosure, provided is a method for manufacturing a separator of the following embodiments.

The method for manufacturing the separator according to a tenth embodiment includes:

obtaining an electrospun sheet from a slurry containing a polymer and inorganic particles through electrospinning, and rolling the electrospun sheet to obtain a polymer composite film,
wherein the inorganic particles include inorganic particles having a fracture toughness of $0.8\ MPa \cdot m^{1/2}$ or more, and
wherein a thickness of the polymer composite film is $15\ \mu m$ or less.

According to an eleventh embodiment, in the tenth embodiment, the rolling may be performed at a compression ratio of 1/3 or less, the compression ratio given by the following Equation 1:

[Equation 1] Compression ratio = (the thickness of the polymer composite film /a thickness of the electrospun sheet)  [Equation 1]

According to a twelfth embodiment, in the tenth or eleventh embodiment, the rolling may be performed at a temperature of 18°C to 60°C.

According to a thirteenth embodiment, in any one of the tenth to twelfth embodiments, the rolling may be performed using a roll press.

According to a fourteenth embodiment, in any one of the tenth to thirteenth embodiments, a weight ratio of the polymer to the inorganic particles in the slurry may be 95:5 to 50:50.

According to still another aspect of the present disclosure, provided is an electrochemical device of the following embodiments.

The electrochemical device according to a fifteenth embodiment includes:

an electrode assembly including the separator according to any one of the first to ninth embodiments, and a first electrode and a second electrode, each electrode present on each of two surfaces of the separator;
an electrolyte; and
a case accommodating the electrode assembly and the electrolyte.

According to a sixteenth embodiment, in the fifteenth embodiment, the electrochemical device may be a lithium secondary battery.

Advantageous Effects

The separator according to an aspect of the present disclosure has an advantage of enhancing heat resistance characteristics and significantly improving heat shrinkage behaviors in separators for electrochemical devices.

The separator according to an aspect of the present disclosure has an advantage of enhancing heat resistance characteristics without an additional coating layer on the porous sheet.

Specifically, the separator according to an aspect of the present disclosure may be formed with a small thickness, including the free-standing porous sheet formed by electrospinning, thereby providing an advantage of improving the performance of the electrochemical device including the same. In particular, when the porous sheet is formed with a small thickness, inorganic particles that improve heat resistance characteristics may be included in the porous sheet without breakage or with minimal breakage, thereby providing an advantage of dramatically improving the heat resistance characteristics of the separator.

Furthermore, the electrochemical device including the separator according to an aspect of the present disclosure may have high thermal stability and improved resistance characteristics.

According to another aspect of the present disclosure, the novel method for manufacturing the separator having the above-described features is provided.

The method for manufacturing the separator according to another aspect of the present disclosure has an advantage of enhancing heat resistance characteristics and improving the efficiency of the separator manufacturing process.

BRIEF DESCRIPTION OF THE DRAWINGS

FIG. 1 is a scanning electron microscopic (SEM) image of a surface of a polymer composite film manufactured according to Comparative Example 3 in this specification (magnification: 5K)

FIG. 2 is an SEM image of a surface of a polymer composite film manufactured according to Example 1 in this specification (magnification: 5K).

FIG. 3 is a graph showing life characteristics evaluation results of an electrochemical device using each of the separators of Comparative Example 3 and Example 1 according to experimental examples in this specification.

BEST MODE

Hereinafter, the present disclosure will be described in detail.

Unless the context clearly indicates otherwise, the terms "comprise" and "include" when used in this specification, specify the presence of the stated elements, but do not preclude the presence or addition of one or more other elements.

In this specification, 'A and/or B' refers to either A or B or both.

It should be understood that certain terms used herein are for the purpose of convenience and not intended to limit the present disclosure. Additionally, the words indicating directions such as up, down, left, right, front, rear, in and out indicate directions in the drawings to which reference is made, or each indicates a direction toward or away from the geometric center of the stated device or system or its components.

Separator for electrochemical device

According to an aspect of the present disclosure, there is provided a separator including a polymer composite film including polymer nanofibers and inorganic particles held together by the polymer nanofibers, wherein the polymer composite film includes a three-dimensional (3D) network structure formed by the polymer nanofibers and a pore structure formed by gaps between the polymer nanofibers, wherein the inorganic particles include inorganic particles having the fracture toughness of 0.8 MPa·m$^{1/2}$ or more, and the polymer composite film is 15 $\mu$m or less in thickness.

As described below, according to an embodiment of the present disclosure, the polymer composite film may be produced by post-processing after it is obtained from a slurry containing polymer and inorganic particles through electrospinning. Accordingly, the polymer composite film includes the plurality of polymer nanofibers formed by electrospinning of the polymer used as the raw material. Specifically, the polymer composite film includes the polymer nanofibers and the inorganic particles held together by the polymer nanofibers. In addition, the polymer composite film includes the 3D network structure formed by the polymer nanofibers and the pore structure formed by the gaps between the polymer nanofibers.

According to an embodiment of the present disclosure, the polymer composite film formed through electrospinning may be in a shape of a free-standing film without a substrate.

In particular, according to an embodiment of the present disclosure, as opposed to a polyolefin-based porous sheet generally produced by melting, extruding and stretching a polyolefin-based polymer, the polyolefin-based substrate-free separator that does not include a polyolefin-based substrate may be provided.

As described above, according to an embodiment of the present disclosure, the 3D network structure formed by the polymer nanofibers may be formed by electrospinning. Likewise, the pore structure formed in the gaps between the polymer nanofibers may be formed by electrospinning.

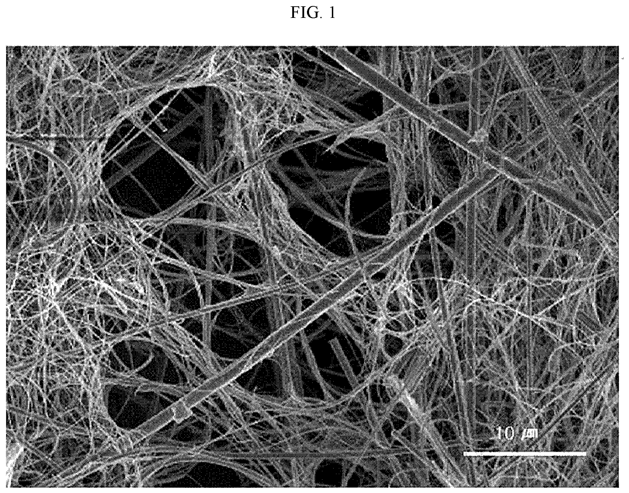

FIG. 1 shows a scanning electron microscopic (SEM) image of a surface of the polymer sheet obtained by electrospinning of the slurry containing the polymer and the inorganic particles. Referring to FIG. 1, the SEM image shows that the polymer nanofibers form the 3D network structure, and the inorganic particles are held together in the form of nodes by the polymer nanofibers within the 3D network structure.

Referring to FIG. 1, it is found that a plurality of pore structures are formed in the gaps between the polymer nanofibers as the polymer nanofibers formed by electrospinning form the 3D network structure. In this instance, pores formed in the surface of the polymer sheet shown in FIG. 1 include a large number of pores having the diameter of 10 $\mu$m or more, as shown.

For the use as the separator for electrochemical devices, the pore diameter on the surface of 10 $\mu$m or more is not desirable. For example, when the pore diameter on the surface of the separator is larger than 10 $\mu$m, short circuits may

occur in electrochemical devices due to physical contact between electrodes on two surfaces of the separator.

Accordingly, according to an embodiment of the present disclosure, to reduce the pore size and thickness of the electrospun sheet including the polymer nanofibers formed by electrospinning and the inorganic particles, the rolled sheet obtained by performing a rolling process as post-processing after electrospinning may be used as the separator.

Specifically, the separator according to an embodiment of the present disclosure includes the polymer composite film having the thickness of 15 $\mu$m or less. Specifically, the thickness of the polymer composite film may be 15 $\mu$m or less and 1 $\mu$m or more, 12 $\mu$m or less and 3 $\mu$m or more, 10 $\mu$m or less and 5 $\mu$m or more, or 9 $\mu$m or less and 6 $\mu$m or more, but the present disclosure is not limited thereto.

In this specification, the "thickness" of the polymer composite film may be measured by a known method for measuring the thickness of each separator component. For example, the thickness of the porous polymer substrate may be measured using a known thickness measurement instrument, for example, a commercially available thickness measurement instrument (Mitutoyo, VL-50S-B). Alternatively, the thickness may be measured through SEM of a cross-section of the polymer composite film, but in the present disclosure, the measuring method is not limited thereto.

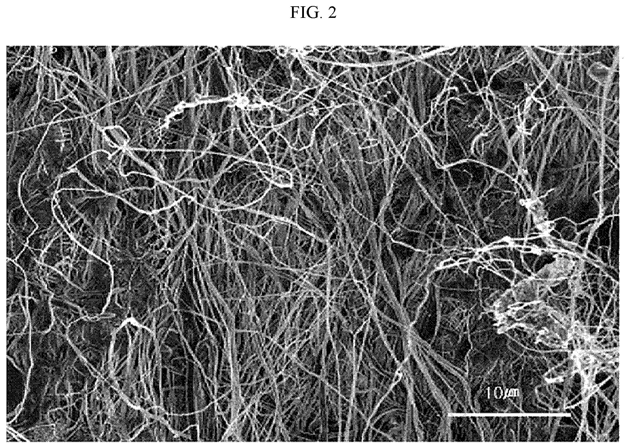

FIG. 2 shows an SEM image of a surface of the porous composite film obtained by rolling the polymer sheet obtained by electrospinning of the slurry containing the polymer and the inorganic particles according to an embodiment of the present disclosure.

Referring to FIG. 2, it is found that a plurality of pore structures are formed in the gaps between the polymer nanofibers as the polymer nanofibers formed by electrospinning form the 3D network structure. In this instance, pores formed on the surface of the polymer sheet shown in FIG. 2 do not have the diameter of 10 $\mu$m or more.

As described above, the separator according to an embodiment of the present disclosure may have the average pore diameter of 10 $\mu$m or less in the polymer film. Specifically, pores formed by the gaps between the polymer nanofibers may have the average diameter of 10 $\mu$m or less. More specifically, the average pore diameter may be, for example, 0.1 $\mu$m to 10 $\mu$m, 0.1 $\mu$m to 5 $\mu$m, 0.1 $\mu$m to 2 $\mu$m, 0.5 $\mu$m to 1.5 $\mu$m, or 0.5 $\mu$m to 1 $\mu$m, but the present disclosure is not limited thereto.

In this specification, the average pore diameter of the porous composite film may be measured by a commonly used method for measuring the pore size of the separator, for example, mercury intrusion porosimetry, and for example, a commercially available mercury intrusion porosimetry analyzer (PoreMaster™, PoreMaster 33 series) may be used to measure, but in the present disclosure, the measuring method is not limited thereto.

The 3D network structure of the polymer nanofibers with a dense structure may be formed through rolling after electrospinning.

According to an embodiment of the present disclosure, the average diameter of the polymer nanofibers may range from, for example, 50 nm to 1,000 nm, and specifically from 50 nm to 800 nm, 80 nm to 600 nm, 100 nm to 500 nm, 100 nm to 300 nm, 100 nm to 200 nm, or 100 nm to 150 nm. The present disclosure is not limited thereto, but the average diameter of the polymer nanofibers may be smaller than the average diameter of the polymer nanofibers of the electrospun sheet formed immediately after electrospinning by rolling. Specifically, when the average diameter of the polymer nanofibers falls within the aforementioned range, this may have a beneficial effect on mechanical strength of the separator including the polymer composite film, but the present disclosure is not limited thereto.

In this specification, the average diameter of the polymer nanofibers may be measured by a known method for measuring the average diameter of electrospun fibers, and for example, may be measured through a commercially available SEM equipment, but the present disclosure is not limited thereto.

In an embodiment of the present disclosure, the polymer nanofibers may include a PVDF-based polymer, an acrylic polymer or a mixture thereof.

The PVDF-based polymer may include, for example, at least one of a homopolymer of vinylidene fluoride (i.e., polyvinylidene fluoride), a copolymer of vinylidene fluoride and a copolymerizable monomer, or a mixture thereof. In an embodiment of the present disclosure, the monomer may include, for example, a fluorinated monomer and/or a chlorinated monomer. Non-limiting examples of the fluorinated monomer may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether (PEVE) or perfluoro(propylvinyl)ether (PPVE); perfluoro(1,3-dioxole); or perfluoro(2,2-dimethyl-1,3-dioxole) (PDD), but the present disclosure is not limited thereto.

The acrylic polymer may refer collectively to, for example, polymers containing acrylic groups in their side chains such as polyacrylonitrile, polymethyl (meth)acrylate or polyethyl (meth)acrylate, and is not limited to a particular type.

Meanwhile, in an embodiment of the present disclosure, the polymer composite film is obtained from the slurry containing the polymer and the inorganic particles. Preferably, the inorganic particles do not break in the rolling process of the electrospun sheet. To this end, the inorganic particles include inorganic particles having the fracture toughness of 0.8 MPa·m$^{1/2}$ or more.

In an embodiment of the present disclosure, the inorganic particles may preferably include heat-resistant particles having the fracture toughness of 0.8 MPa·m$^{1/2}$ or more and capable of improving the heat resistance of the separator.

In an embodiment of the present disclosure, the inorganic particles may include, for example, $Al_2O_3$, $Al(O)OH$, $BaTiO_3$, $Pb(Zr,Ti)O_3$ (PZT), $Pb_{1-x}La_xZr_{1-y}Ti_yO_3$ (PLZT, $0<x<1$, $0<y<1$), $HfO_2$, $SrTiO_3$, $SnO_2$, $CeO_2$, $MgO$, $NiO$, $CaO$, $ZnO$, $ZrO_2$, $Y_2O_3$, $SiC$, $TiO_2$ or a mixture of two or more thereof, but the present disclosure is not limited thereto.

According to an embodiment of the present disclosure, the inorganic particles may include aluminum oxide ($Al_2O_3$). As described above, the inorganic particles may be included to increase the mechanical strength of the electrospun sheet obtained by electrospinning and improve the heat resistance of the separator. When aluminum oxide is included as the inorganic particles, the inorganic particles do not break and are stably maintained in the rolling process of the electrospun sheet formed from the slurry containing the polymer and the inorganic particles, and this may have a beneficial effect on maintaining the structure of the separator and improving the heat resistance, but the present disclosure is not limited thereto.

In this specification, the fracture toughness of the inorganic particles may be measured using a known fracture toughness value of the corresponding inorganic particles or by a known method for measuring the fracture toughness of the inorganic particles. For example, the fracture toughness value $K_{IC}$ may be measured according to the ASTM E399 standard method, but the measurement method is not limited thereto.

In an embodiment of the present disclosure, the fracture toughness of the inorganic particles is preferably 0.8 $MPa \cdot m^{1/2}$ or more, and specifically, 1 $MPa \cdot m^{1/2}$ or more, 2 $MPa \cdot m^{1/2}$ or more, or 3 $MPa \cdot m^{1/2}$ or more. For example, the fracture toughness of the inorganic particles may be 0.8 to 8 $MPa \cdot m^{1/2}$, 1 to 8 $MPa \cdot m^{1/2}$, 2 to 6 $MPa \cdot m^{1/2}$, 3 to 5 $MPa \cdot m^{1/2}$, or 4 to 5 $MPa \cdot m^{1/2}$, but the upper limit of the fracture toughness of the inorganic particles is not limited to a particular range.

In an embodiment of the present disclosure, in addition to the above-described types of inorganic particles, the polymer composite film may further include other types of inorganic particles without departing from the scope of the present disclosure. For example, the inorganic particles that may be further included are not limited to a particular one and may include any electrochemically stable one. Specifically, the inorganic particles that may be further included are not limited to a particular one and may include those in which oxidation and/or reduction reaction does not take place within the operating voltage range of an electrochemical device applied (for example, 0 to 5V vs Li/Li+).

In an embodiment of the present disclosure, the polymer composite film may further include inorganic particles having the fracture toughness of less than 0.8 $MPa \cdot m^{1/2}$. For example, in addition to the above-described inorganic particles, the polymer composite film may further include $Pb(Mg_{1/3}Nb_{2/3})O_3$-$PbTiO_3$ (PMN-PT), $SiO_2$, $SiC$, $Si_3N_4$ or a mixture thereof, but the present disclosure is not limited thereto.

In an embodiment of the present disclosure, the average particle size $D_{50}$ of the inorganic particles may be, for example, 50 to 1,000 nm. When the average particle size of the inorganic particles falls within the aforementioned range, this may have a beneficial effect on suppressing the resistance rise of the separator, but the present disclosure is not limited thereto.

In this specification, the particle size of the inorganic particles may be measured by a known particle size measuring method, and for example, Malvern's particle size analyzer (PSA) may be used to measure. In addition, the average particle size $D_{50}$ refers to a particle size at the 50% point of the cumulative volume particle size distribution, and may be measured using a laser diffraction method. In this instance, the laser diffraction particle size measurement instrument may include, for example, Microtrac S3500.

Method for manufacturing separator

A method for manufacturing a separator for an electrochemical device according to another aspect of the present disclosure will be described with reference to the foregoing.

The method for manufacturing the separator according to another aspect of the present disclosure includes the steps of obtaining the electrospun sheet from the slurry containing the polymer and the inorganic particles through electrospinning, and rolling the electrospun sheet to obtain the polymer composite film, wherein the inorganic particles include inorganic particles having the fracture toughness of 0.8 $MPa \cdot m^{1/2}$ or more, and the polymer composite film is 15 μm or less in thickness.

First, the step of obtaining the electrospun sheet from the slurry containing the polymer and the inorganic particles through electrospinning may be performed by a commonly used method for forming a porous sheet through electrospinning.

For example, the polymer for forming the polymer nanofibers and the inorganic particles may be added to an organic solvent to obtain a homogeneous slurry, and the slurry may be fed into an electrospinning machine to obtain an electrospun sheet by electrospinning.

In this instance, the organic solvent may be appropriately selected depending on the type of the polymer and the inorganic particles, and is not limited to a particular one and may include any suitable one for the purpose of electrospinning.

In an embodiment of the present disclosure, a weight ratio of the polymer to the inorganic particles in the slurry may be 95:5 to 80:20.

According to an embodiment of the present disclosure, after a polymer solution containing the polymer and a dispersion containing the inorganic particles are mixed at the optimal ratio, electrospinning may be performed through the electrospinning machine.

In an embodiment of the present disclosure, the solid content in the polymer solution containing the polymer may be, for example, 10 to 90 wt%, 10 to 50 wt%, or 50 to 90 wt%, but the present disclosure is not limited thereto.

In an embodiment of the present disclosure, the solid content in the dispersion containing the inorganic particles may be, for example, 10 to 90 wt%, 10 to 50 wt%, or 50 to 90 wt%, but the present disclosure is not limited thereto.

In an embodiment of the present disclosure, the dispersion containing the inorganic particles may include, for example, hydrochloric acid to promote better dispersion of the inorganic particles, but the present disclosure is not limited thereto.

In an embodiment of the present disclosure, the polymer solution and the inorganic particle dispersion may be, for example, mixed at a volume ratio of 5:5 to 9:1, 5:5 to 8:2, 5:5 to 7:3, 7:3 to 9:1, or 8:2 to 9:1, but the present disclosure is not limited thereto.

In an embodiment of the present disclosure, in the electrospinning process, the diameter of the electrospinning needle may, for example, range from 10 to 1,000 mm, and for example, the electrospinning machine may be used, but the present disclosure is not limited thereto.

In an embodiment of the present disclosure, the electrospinning is not limited thereto, and may be, for example, performed by applying a voltage of 10 to 20 kV.

In an embodiment of the present disclosure, the electrospinning is not limited thereto, and may be, for example, performed at room temperature or the temperature of 23°C to 26°C.

In an embodiment of the present disclosure, after the electrospinning, the method may further include a drying process to form a sheet, and for example, the drying process may be performed at the temperature of 60°C to 100°C, 60°C to 80°C, or 80°C to 100°C to obtain the electrospun sheet, but the present disclosure is not limited thereto.

In an embodiment of the present disclosure, the thickness of the electrospun sheet obtained through the electrospinning may be, for example, 50 $\mu$m to 100 $\mu$m. In addition, as described above, the average diameter of the pores formed by the gaps between the polymer nanofibers in the electrospun sheet may be 10 $\mu$m or more.

Accordingly, according to an embodiment of the present disclosure, the subsequent rolling process may be performed to reduce the thickness and the pore size to use the electrospun sheet as the separator for the electrochemical device.

In an embodiment of the present disclosure, the rolling may be performed to reduce the thickness of the polymer composite film being manufactured below 15 $\mu$m. Specifically, the rolling may be performed such that the thickness of the polymer composite film is 15 $\mu$m or less and 1 $\mu$m or more, 12 $\mu$m or less and 3 $\mu$m or more, 10 $\mu$m or less and 5 $\mu$m or more, or 9 $\mu$m or less and 6 $\mu$m or more, but the present disclosure is not limited thereto.

In another embodiment of the present disclosure, the rolling may be performed at a compression ratio of 1/3 or less, the compression ratio given by the following Equation 1:

[Equation 1] Compression ratio = (the thickness of the polymer composite film / the thickness of the electrospun sheet)         [Equation 1]

In an embodiment of the present disclosure, the rolling may be preferably performed to reduce the thickness without a structural change to the 3D polymer network formed by the polymer nanofibers in the electrospun sheet. Accordingly, the rolling may be preferably performed by cold rolling.

For example, the rolling may be preferably performed at the temperature of 15°C to 60°C, 18°C to 60°C, 25°C to 60°C, 30°C to 50°C, 35°C to 45°C, 18°C to 28°C, and specifically 22°C to 26°C, but the present disclosure is not limited thereto.

In an embodiment of the present disclosure, for cold rolling, the rolling may be, for example, performed using a roll press.

In an embodiment of the present disclosure, the rolling may be, for example, performed under the pressure of 1 to 20 tons, and specifically 5 to 20 tons, 5 to 10 tons, 10 to 20 tons, or 10 to 15 tons, but the present disclosure is not limited thereto.

The method for manufacturing the separator according to another aspect of the present disclosure has an effect of providing the free-standing separator without a polyolefin-based substrate. Specifically, there is an advantage of providing the separator having the outstanding heat resistance characteristics through the polymer composite film including the polymer nanofibers and the inorganic particles, but the effects of the present disclosure are not limited thereto.

According to still another aspect of the present disclosure, there is provided an electrochemical device including the above-described separator.

The electrochemical device according to still another aspect of the present disclosure includes an electrode assembly including the above-described separator and a first electrode and a second electrode, each electrode present on each of two surfaces of the separator; an electrolyte; and a case accommodating the electrode assembly and the electrolyte.

In an embodiment of the present disclosure, the electrochemical device may include, for example, a primary battery, a secondary battery, a super capacitor or an electric double layer capacitor. More specifically, the secondary battery may include a lithium ion secondary battery.

In an embodiment of the present disclosure, each of the first electrode and the second electrode may be a positive electrode or a negative electrode. Each of the positive electrode and the negative electrode may include a current collector and an electrode active material coated on the current collector, and is not limited to a particular size, shape or type of active material.

In an embodiment of the present disclosure, the electrolyte may include any type of electrolyte commonly used in the art according to the type of electrochemical device that will be manufactured, or the type of the first electrode and the second electrode, and is not limited to a particular composition.

In an embodiment of the present disclosure, the case may include any type of battery case commonly used in the art, and is not limited to a particular shape according to the use of the battery. For example, the case may be cylindrical, prismatic, pouch-shaped, or coin-shaped using a can.

When the electrode assembly is completed, the electrode assembly may be housed in the case, followed by electrolyte injection and case sealing by a commonly used method to manufacture the electrochemical device, and in this instance, the electrochemical device may be, for example, a lithium secondary battery.

Hereinafter, the present disclosure will be described in more detail through examples, but the following examples are provided to describe the present disclosure by way of illustration, and the scope of the present disclosure is not limited thereto.

Experimental Example 1. Manufacture and property evaluation of separator

[Manufacture of separator]

Comparative Example 1

A hydrochloric acid solution ($HCl \cdot H_2O$) (solid content 50 wt%) containing silica ($SiO_2$, fracture toughness < 0.8 $MPa \cdot m^{1/2}$) and a solution (solid content 50 wt%) containing a binder (PvDF) were prepared and mixed at a volume ratio of 7:3. The mixture solution was coated on an electrospinning substrate using an electrospinning machine. Electrospinning was performed at a temperature of 25°C by applying a voltage of 15 kV. Subsequently, the coated solution was dried at a temperature of 80°C to obtain a polymer composite film as an electrospun sheet. In this instance, the obtained polymer composite film had a thickness of 65 $\mu$m and an average pore diameter of 10 $\mu$m.

Comparative Example 2

The polymer composite film made in Comparative Example 1 was compressed to a thickness of 13 $\mu$m by roll pressing at 45°C under the pressure of 10 tons, yielding the polymer composite film having an average pore diameter of 0.5 $\mu$m.

As a result of observing the polymer composite film according to Comparative Example 2 through SEM equipment, it was confirmed that the silica particles were broken too much, making it unsuitable for separator performance.

Comparative Example 3

A hydrochloric acid solution ($HCl \cdot H_2O$) (solid content 50 wt%) containing aluminum oxide ($Al_2O_3$, fracture toughness 5 $MPa \cdot m^{1/2}$) and a solution (solid content 50 wt%) containing a binder (PvDF) were prepared and mixed at a volume ratio of 7:3. The mixture solution was coated on an electrospinning substrate using an electrospinning machine. Electrospinning was performed at a temperature of 25°C by applying a voltage of 15 kV. Subsequently, the coated solution was dried at a temperature of 80°C to obtain an electrospun sheet having a thickness of 65 $\mu$m and an average pore diameter of 10 $\mu$m.

Example 1

The electrospun sheet made in Comparative Example 3 was compressed to a thickness of 13 $\mu$m by roll pressing at 45°C under the pressure of 10 tons to obtain a polymer composite film an average pore diameter of 0.5 $\mu$m.

[Manufacture of separator]

FIG. 1 (Comparative Example 3) and FIG. 2 (Example 1) show the results of observing the surfaces of the separators of Comparative Example 3 and Example 1 using SEM (Hitachi), respectively. In addition, the thickness of the manufactured separator was measured using a thickness measurement instrument (Mitutoyo, VL-50S-B), and TABLE 1 below summarizes the measurement results. In addition, the average diameter of pores formed by the gaps of the polymer nanofibers in the manufactured separator was measured using a pore analyzer (PoreMaster™, PoreMaster 33 series), and TABLE 1 below summarizes the measurement results.

TABLE 1

|  | Comparative Example 3 | Example 1 |
| --- | --- | --- |
| Thickness ($\mu$m) | 65 | 13 |
| pore diameter ($\mu$m) | 10 | 0.5 |

As can be seen through FIGS. 1 and 2 and TABLE 1, when the polymer sheet is formed through electrospinning and compressed through the rolling process whereby the thickness of the polymer composite film is 15 $\mu$m or less, the average pore diameter is reduced, making it more suitable for a separator for an electrochemical device.

Experimental Example 2. Evaluation of electrochemical performance

[Manufacture of electrochemical device]

An electrochemical device was manufactured using the as-prepared separator as follows, and charge and discharge characteristics were evaluated.
As the separator, the as-prepared separator of Comparative Example 3 or Example 1 was used, a negative electrode and a positive electrode were prepared as follows and each was attached to each one surface of the separator to manufacture an electrode assembly.

Manufacture of negative electrode

An active material (Graphite), a binder polymer (SBR) and a conductive material (Super P) were mixed in distilled water at a weight ratio of 95:0.5:4.5 to prepare a composition for forming a negative electrode.
The composition for forming the negative electrode was applied to one surface of a copper current collector and dried to prepare the negative electrode. The loading amount of the negative electrode was 5.3 mAh/cm$^2$.

Manufacture of positive electrode

An active material (NCMA), a binder polymer (PVDF) and a conductive material (CNT) were mixed in a solvent (NMP) at a weight ratio of 97:1:2 to prepare a composition for forming a positive electrode.
The composition for forming the positive electrode was applied to one surface of an aluminum current collector and dried to prepare the positive electrode. The loading amount of the positive electrode was 4.949 mAh/cm$^2$.

Assembly of electrode assembly

Each of the positive electrode and the negative electrode was placed on each surface of the separator, rolled under the conditions of 90°C, 4 MPa and 1s and dried to obtain an electrode assembly having the theoretical capacity of 50 mAh.

Preparation of electrolyte

1M LiPF$_6$ was dissolved in a DMC/DOL (1/1 v/v) solvent to prepare an electrolyte.

Manufacture of electrochemical device

The as-prepared electrode assembly was placed in a case, the electrolyte was injected into the case, and the case was sealed to manufacture a coin-type battery.

[Evaluation of charge and discharge characteristics]

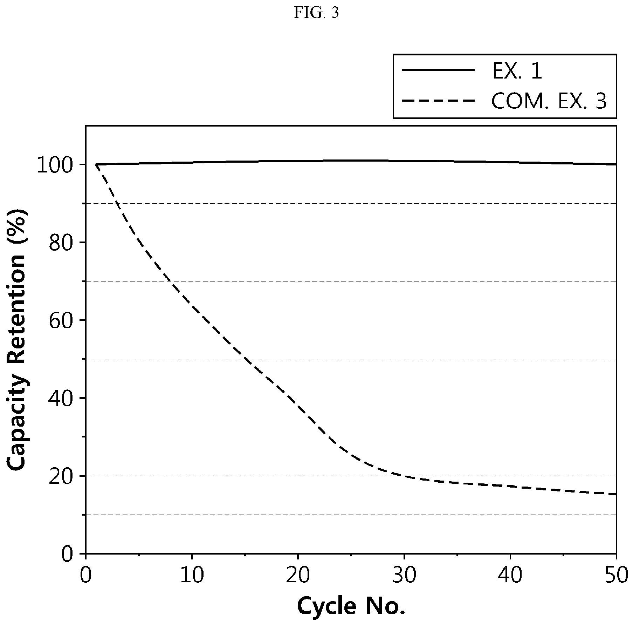

The as-prepared battery was charged at 0.33C and discharged at 0.33C over charge and discharge cycles under CC-CV conditions in a voltage range of 2.5V and 4.3V, and FIG. 3 shows the results.

As shown in FIG. 3, it was confirmed that life characteristics of the electrochemical device using the separator of Example 1 were significantly improved compared to the electrochemical device using the separator of Comparative Example 3.

**Claims**

1. A separator for an electrochemical device comprising:

   a polymer composite film including polymer nanofibers and inorganic particles held together by the polymer nanofibers,
   wherein the polymer composite film includes a three-dimensional network structure formed by the polymer nanofibers and a pore structure formed by gaps between the polymer nanofibers.
   wherein the inorganic particles include inorganic particles having a fracture toughness of 0.8 MPa·m$^{1/2}$ or more, and
   wherein a thickness of the polymer composite film is 15 $\mu$m or less.

2. The separator for the electrochemical device according to claim 1,
   wherein the polymer composite film is in a shape of a free-standing film.

3. The separator for the electrochemical device according to claim 1,
   wherein the three-dimensional network structure is formed by electrospinning.

4. The separator for the electrochemical device according to claim 1,
   wherein the separator is free of a polyolefin-based substrate.

5. The separator for the electrochemical device according to claim 1,
   wherein an average pore diameter of the polymer composite film is 10 $\mu$m or less.

6. The separator for the electrochemical device according to claim 1,
   wherein an average diameter of the polymer nanofibers is 50 nm to 1,000 nm.

7. The separator for the electrochemical device according to claim 1,
   wherein the inorganic particles include $Al_2O_3$, $Al(O)OH$, $BaTiO_3$, $Pb(Zr,Ti)O_3$ (PZT), $Pb_{1-x}La_xZr_{1-y}Ti_yO_3$ (PLZT, 0<x<1, 0<y<1), $HfO_2$, $SrTiO_3$, $SnO_2$, $CeO_2$, $MgO$, $NiO$, $CaO$, $ZnO$, $ZrO_2$, $Y_2O_3$, SiC, $TiO_2$ or a mixture of two or more thereof.

8. The separator for the electrochemical device according to claim 1,
   wherein the inorganic particles further include inorganic particles having the fracture toughness of less than 0.8 MPa·m$^{1/2}$

9. The separator for the electrochemical device according to claim 1,
   wherein the polymer nanofibers include a PVDF-based polymer, an acrylic polymer or a mixture thereof.

10. A method for manufacturing a separator for an electrochemical device, the method comprising:

    obtaining an electrospun sheet from a slurry containing a polymer and inorganic particles through electrospinning, and
    rolling the electrospun sheet to obtain a polymer composite film,

wherein the inorganic particles include inorganic particles having a fracture toughness of 0.8 MPa·m$^{1/2}$ or more, and
wherein a thickness of the polymer composite film is 15 μm or less.

11. The method for manufacturing the separator for the electrochemical device according to claim 10,
wherein the rolling is performed at a compression ratio of 1/3 or less, the compression ratio given by the following Equation 1:

Compression ratio = (the thickness of the polymer composite film /a thickness of the electrospun sheet)   [Equation 1]

12. The method for manufacturing the separator for the electrochemical device according to claim 10,
wherein the rolling is performed at a temperature of 18°C to 60°C.

13. The method for manufacturing the separator for the electrochemical device according to claim 10,
wherein the rolling is performed using a roll press.

14. The method for manufacturing the separator for the electrochemical device according to claim 10,
wherein a weight ratio of the polymer to the inorganic particles in the slurry is 95:5 to 50:50.

15. An electrochemical device comprising:

an electrode assembly including the separator according to any one of claims 1 to 9, and a first electrode and a second electrode, each electrode present on each of two surfaces of the separator;
an electrolyte; and
a case accommodating the electrode assembly and the electrolyte.

16. The electrochemical device according to claim 15,
wherein the electrochemical device is a lithium secondary battery.

FIG. 1

FIG. 2

FIG. 3

## INTERNATIONAL SEARCH REPORT

| International application No. |
| --- |
| **PCT/KR2025/005780** |

| A. | CLASSIFICATION OF SUBJECT MATTER |
| --- | --- |

**H01M 50/446**(2021.01)i; **H01M 50/44**(2021.01)i; **H01M 50/443**(2021.01)i; **H01M 50/431**(2021.01)i; **H01M 50/489**(2021.01)i; **H01M 50/42**(2021.01)i; **H01M 50/426**(2021.01)i; **H01M 50/403**(2021.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 50/446(2021.01); H01M 10/02(2006.01); H01M 2/14(2006.01); H01M 2/16(2006.01); H01M 50/409(2021.01); H01M 50/466(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자 나노 섬유(polymer nanofiber), 무기입자(inorganic particle), 공극 (pore), 파괴 인성(fracture toughness), 두께(thickness), 분리막(separator)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2015-0050518 A (LG CHEM, LTD.) 08 May 2015 (2015-05-08)<br>paragraphs [0001]-[0049] and claims 6-10 | 1-16 |
| Y | KR 10-2020-0051370 A (LG CHEM, LTD.) 13 May 2020 (2020-05-13)<br>paragraphs [0014]-[0146] and claims 1-4 | 1-16 |
| Y | JP 2017-004956 A (NANO & ADVANCED MATERIALS INSTITUTE LTD.) 05 January 2017 (2017-01-05)<br>claim 5 | 2 |
| A | KR 10-2023-0049638 A (SABIC GLOBAL TECHNOLOGIES B.V.) 13 April 2023 (2023-04-13)<br>claims 1-15 | 1-16 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 August 2025** | **12 August 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/005780** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2008-0013209 A (KOREA ADVANCED INSTITUTE OF SCIENCE AND TECHNOLOGY) 13 February 2008 (2008-02-13)<br>claims 1-18 | 1-16 |

Form PCT/ISA/210 (second sheet) (July 2022)

**INTERNATIONAL SEARCH REPORT**
Information on patent family members

International application No.

**PCT/KR2025/005780**

| Patent document cited in search report | | | Publication date (day/month/year) | Patent family member(s) | | | Publication date (day/month/year) |
|---|---|---|---|---|---|---|---|
| KR | 10-2015-0050518 | A | 08 May 2015 | KR | 10-1689754 | B1 | 26 December 2016 |
| | | | | US | 2015-0132632 | A1 | 14 May 2015 |
| | | | | US | 9419265 | B2 | 16 August 2016 |
| KR | 10-2020-0051370 | A | 13 May 2020 | CN | 111742425 | A | 02 October 2020 |
| | | | | CN | 111742425 | B | 04 April 2023 |
| | | | | EP | 3764427 | A1 | 13 January 2021 |
| | | | | EP | 3764427 | B1 | 04 June 2025 |
| | | | | JP | 2021-513190 | A | 20 May 2021 |
| | | | | JP | 7142708 | B2 | 27 September 2022 |
| | | | | KR | 10-2385925 | B1 | 11 April 2022 |
| | | | | US | 11769929 | B2 | 26 September 2023 |
| | | | | US | 2020-0350546 | A1 | 05 November 2020 |
| | | | | WO | 2020-096310 | A1 | 14 May 2020 |
| JP | 2017-004956 | A | 05 January 2017 | CN | 106252560 | A | 21 December 2016 |
| | | | | EP | 3104430 | A1 | 14 December 2016 |
| | | | | US | 2016-0365556 | A1 | 15 December 2016 |
| KR | 10-2023-0049638 | A | 13 April 2023 | CN | 115803912 | A | 14 March 2023 |
| | | | | EP | 4179583 | A1 | 17 May 2023 |
| | | | | US | 2023-0261324 | A1 | 17 August 2023 |
| | | | | WO | 2022-008745 | A1 | 13 January 2022 |
| KR | 10-2008-0013209 | A | 13 February 2008 | JP | 2010-500718 | A | 07 January 2010 |
| | | | | JP | 5031836 | B2 | 26 September 2012 |
| | | | | KR | 10-0845239 | B1 | 10 July 2008 |
| | | | | US | 2010-0304205 | A1 | 02 December 2010 |
| | | | | US | 2014-0329131 | A1 | 06 November 2014 |
| | | | | US | 2016-0351876 | A1 | 01 December 2016 |
| | | | | WO | 2008-018657 | A1 | 14 February 2008 |

Form PCT/ISA/210 (patent family annex) (July 2022)